# EUROPEAN PATENT SPECIFICATION

(11) **EP 3 358 806 B1**
(45) Date of publication and mention of the grant of the patent: **30.12.2020**
(21) Application number: 16858618.8
(22) Date of filing: 25.04.2016
(51) Int. Cl.: H04L 29/08, G06F 9/48

(54) **METHOD, DEVICE AND SERVER FOR SERVICE MIGRATION DURING SOFTWARE UPGRADE UNDER NFV ARCHITECTURE**
VERFAHREN, VORRICHTUNG UND SERVER ZUR DIENSTMIGRATION WÄHREND EINER SOFTWAREAKTUALISIERUNG UNTER EINER NFV-ARCHITEKTUR
PROCÉDÉ, DISPOSITIF ET SERVEUR POUR LA MIGRATION DE SERVICES PENDANT LA MISE À NIVEAU LOGICIELLE SOUS UNE ARCHITECTURE NFV

(30) Priority: 29.10.2015 CN 201510715708
(43) Date of publication of application: 08.08.2018
(73) Proprietor: Huawei Technologies Co., Ltd., Longgang District Shenzhen, Guangdong 518129 (CN)
(72) Inventor: LI, Long, Shenzhen Guangdong 518129 (CN); GONG, Xuewen, Shenzhen Guangdong 518129 (CN)
(74) Representative: Körber, Martin Hans
(86) International application number: PCT/CN2016/080106
(87) International publication number: WO 2017/071169

(56) References cited:
- WO-A1-2015/135611
- CN-A- 103 019 847
- CN-A- 104 133 690
- CN-A- 104 410 672
- CN-A- 104 869 023
- JP-A- 2012 185 546
- US-A1- 2014 304 698
- US-B1- 8 782 632

## Description

### TECHNICAL FIELD

The present invention relates to the field of communications technologies, and specifically, to a service migration method, apparatus, and server that are used in a software upgrade in an NFV architecture.

### BACKGROUND

As a new architecture, network functions virtualization (NFV) carries a function in a software processing manner by using commodity hardware such as x86 and virtualization technologies, thereby reducing expensive equipment costs in a network application process.

In an actual application, software deployed on a virtualized infrastructure manager (VIM) module and a network functions virtualization infrastructure (NFVI) module in the NFV architecture has a version upgrade requirement. Therefore, new-version software needs to be re-deployed, and a service running on old-version software needs to be migrated to run on the new-version software. There is a relatively high requirement for service reliability in the telecommunications field, and an annual service interruption time is required to be less than five minutes, that is, to meet an availability requirement of five nines. Therefore, a software upgrade in the NFV architecture needs to meet the availability requirement of five nines, that is, to ensure that a service migration in the software upgrade does not interrupt a running service.

Currently, when the new-version software and the old-version software in the NFV architecture meet a compatibility condition, the service migration in the software upgrade may be performed in a manner of a virtual machine live migration. However, when the new-version software and the old-version software do not meet the compatibility condition, after a virtual machine running on the old-version software is migrated to the new-version software, the virtual machine cannot run normally. As a result, a service on the virtual machine cannot run normally, and consequently, the service on the virtual machine is interrupted. CN 104 410 672 A discloses a method for networking function virtualization applications upgrading.

### SUMMARY

The present invention provides a service migration method that is used in a software upgrade in an NFV architecture. Regardless of whether new-version software and old-version software in an upgrade meet a compatibility condition, the present invention can help ensure that a service migrated in the software upgrade can run normally and continuously.

The invention is defined in the independent claims. Additional features of the invention are provided in the dependent claims. In the following, parts of the description and drawings referring to embodiments which are not covered by the claims are not presented as embodiments of the invention, but as examples useful for understanding the invention.

To resolve the foregoing technical problem, the following technical solutions are used in the present invention.

A first aspect of the present invention provides a service migration method that is used in a software upgrade in an NFV architecture. The method includes:
in a software upgrade process, sending, by a virtualized network function manager VNFM module that is located at an upper layer of an infrastructure layer that is at a bottommost layer in the NFV architecture, a virtual machine VM request command to a first virtualized infrastructure manager VIM module that is located at the bottommost layer, where the command is used to instruct the first VIM module to request a virtual machine; and the software upgrade may be classified into two cases, one case is that the first VIM module undergoes a software upgrade and a virtualized network function infrastructure correspondingly managed by the first VIM module also undergoes a software upgrade, the other case is that the virtualized network function infrastructure correspondingly managed by the first VIM module undergoes a software upgrade but the first VIM module does not undergo a software upgrade, and the two cases may be summarized as that the first VIM module manages a first host on which post-upgrade new-version software is configured;
receiving, by the VNFM module, a VM request response from the first VIM module, where the request response carries information about a VM that the first VIM module requests based on a request of the VNFM module, which is specifically information about a first VM that the first VIM module requests on the first host, and virtual machine own data that can run on the first host is configured on the first VM; when the first VIM module requests the first VM, the virtual machine own data may be configured for the first VM, so that the first VM can run on the first host, that is, so that the VM obtained by means of requesting adapts to the upgraded software; and the configured virtual machine own data includes data other than service data running on the virtual machine, for example, environment configuration parameter data; and
after the first VIM module obtains, by means of requesting, the VM that is adaptable to the upgraded software, and notifies the VNFM module, sending, by the VNFM module, a service migration command to a virtualized network function VNF module, where the service migration command is used to instruct the VNF module to migrate a running service on a second VM to the first VM, and the second VM is deployed on a second host on which pre-upgrade old-version software is configured.

In the technical solution provided in the first aspect of embodiments of the present invention, the VNFM module at an intermediate layer instructs the first VIM module at the bottom layer to request the first VM and configure the first VM module, so that the virtual machine own data that can run on the first host on which the post-upgrade new-version software is configured is configured on the first VM, and then the VNF module migrates the service to the first VM. Because the first VIM module configures the virtual machine own data based on a software upgrade status when requesting the VM, even if a pre-upgrade software version and a post-upgrade software version are not compatible, it can be ensured that the virtual machine own data of the requested virtual machine meets a requirement of the upgraded software. Therefore, the newly requested virtual machine can run normally, and further, the service migration can still be implemented even if the virtual machine cannot run normally. This helps ensure that the service migrated in the software upgrade runs normally and continuously, and even that the service is not interrupted.

In the solution provided in the first aspect of the present invention, the virtual machine request command that is sent by the VNFM module to the first VIM module may include a virtual machine specification parameter that is used to instruct the first VIM module to request a virtual machine according to the specification parameter. The specification parameter may be, for example, a memory size or a quantity of CPUs.

In addition, in the solution provided in the first aspect of the present invention, the migration of the running service by the VNF module may be specifically a migration of service data by the VNF module. The service data specifically includes database data of the service and message data of the service. The VNF module may specifically migrate the running service by means of active/standby switchover, service distribution, protocol adjustment, or the like.

According to the solution provided in the first aspect of the present invention, the method further includes:
after the VNFM module receives a service migration completion notification from the VNF module, releasing, by the VNFM module, the second VM, to avoid a waste of idle resources.

In a scenario in which both software deployed on a VIM module and software deployed on any host on an NFVI module managed by the VIM module have a version upgrade requirement, the post-upgrade new-version software is configured on the first VIM module, and the second host is managed by a second VIM module on which the pre-upgrade old-version software is configured.

In this scenario, before the VNFM module sends the service migration command to the virtualized network function VNF module, the method further includes:
sending, by the VNFM module, a virtual machine query command to the second VIM module, where the virtual machine query command is used to instruct the second VIM module to query information about the second VM that is running a service of the VNF module.

Specifically, because the service of the VNF module is currently running on a VM on the second host managed by the second VIM module, the VNFM module obtains the information about the second VM by instructing the second VIM module to query the VM that is running the service of the VNF module. The VNFM module sends a virtual machine query command that carries an identifier of the VNF module to the second VIM module. The second VIM module queries, according to the identifier of the VNF module, information about the VM that is running the service of the VNF module.

After obtaining the information about the second VM and the information about the first VM, the VNFM module sends a service migration command that carries the information about the second VM and the information about the first VM to the VNF module.

In this case, an EMS module may be used as a forwarding module. Specifically, the VNFM module sends the service migration command to the element management system EMS module, so that the EMS module forwards the service migration command to the VNF module, where the EMS module is configured to manage the VNF module.

The foregoing case can implement that in the scenario in which both software deployed on a VIM module and software deployed on any host on an NFVI module managed by the VIM module have a version upgrade requirement, because the VIM module configures the virtual machine own data based on a software upgrade status when requesting the VM, even if a pre-upgrade software version and a post-upgrade software version are not compatible, it can be ensured that the virtual machine own data of the requested virtual machine meets a requirement of the upgraded software. Therefore, the newly requested virtual machine can run normally, and further, the service migration can still be implemented even if the virtual machine cannot run normally. This helps ensure that the service migrated in the software upgrade runs normally and continuously.

In a scenario in which software deployed on a VIM module is not upgraded and only software deployed on any host on an NFVI module managed by the VIM module has a version upgrade requirement, the second host is managed by the first VIM module.

In this scenario, before the VNFM module sends the service migration command to the virtualized network function VNF module, the method further includes:
sending, by the VNFM module, a virtual machine query command to the first VIM module, where the virtual machine query command is used to instruct the first VIM module to query information about the second VM that is running a service of the VNF module.

Specifically, because the service of the VNF module is currently running on a VM on the second host managed by the first VIM module, the VNFM module obtains the information about the second VM by instructing the first VIM module to query the VM that is running the service of the VNF module. The VNFM module sends a virtual machine query command that carries an identifier of the VNF module to the first VIM module. The first VIM module queries, according to the identifier of the VNF module, information about the VM that is running the service of the VNF module.

After obtaining the information about the second VM and the information about the first VM, the VNFM module sends a service migration command that carries the information about the second VM and the information about the first VM to the VNF module.

In this case, the post-upgrade new-version software configured on the first host and the pre-upgrade old-version software configured on the second host may be homogeneous software or heterogeneous software.

In this case, an EMS module may also be used as a forwarding module. Specifically, the VNFM module sends the service migration command to the element management system EMS module, so that the EMS module forwards the service migration command to the VNF module, where the EMS module is configured to manage the VNF module.

The foregoing case can implement that in the scenario in which both software deployed on a VIM module and software deployed on any host on an NFVI module managed by the VIM module have a version upgrade requirement, because the VIM module configures the virtual machine own data based on a software upgrade status when requesting the VM, even if a pre-upgrade software version and a post-upgrade software version are not compatible, it can be ensured that the virtual machine own data of the requested virtual machine meets a requirement of the upgraded software. Therefore, the newly requested virtual machine can run normally, and further, the service migration can still be implemented even if the virtual machine cannot run normally. This helps ensure that the service migrated in the software upgrade runs normally and continuously.

A second aspect of the present invention provides a service migration apparatus that is used in a software upgrade in an NFV architecture. The apparatus is configured to implement the foregoing service migration method that is used in a software upgrade in an NFV architecture and that is provided in the first aspect.

In the solution provided in the fourth aspect of the present invention, the computer program may further instruct the relevant hardware to perform each step of the foregoing service migration method that is used in a software upgrade in an NFV architecture and that is provided in the first aspect.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and ordinary persons skilled in the art may still derive other drawings from these accompanying drawings.
FIG. 1 is a schematic system architecture diagram of an NFV system 100 according to an embodiment of the present invention;
FIG. 2 is a schematic architecture diagram of an upgrade between VIM modules with homogeneous software according to an embodiment of the present invention;
FIG. 3 is a signaling interaction diagram of a service migration method that is used in an upgrade between VIM modules with homogeneous software in an NFV architecture, according to an embodiment of the present invention;
FIG. 4 is a schematic architecture diagram of an upgrade between VIM modules with heterogeneous software according to an embodiment of the present invention;
FIG. 5 is a schematic diagram of an architecture in which software deployed on a VIM module is not upgraded and only software deployed on a host is upgraded, according to an embodiment of the present invention;
FIG. 6 is a signaling interaction diagram of a method used when software deployed on a VIM module is not upgraded and only software deployed on a host is upgraded, according to an embodiment of the present invention;
FIG. 7 is a schematic structural diagram of a service migration apparatus that is used in a software upgrade in an NFV architecture, according to an embodiment of the present invention; and
FIG. 8 is a schematic structural diagram of a service migration server that is used in a software upgrade in an NFV architecture, according to an embodiment of the present invention.

### DESCRIPTION OF EMBODIMENTS

In order to make persons skilled in the art to better understand the solutions in the present invention, the following further describes the embodiments of the present invention in detail with reference to accompanying drawings and implementations.

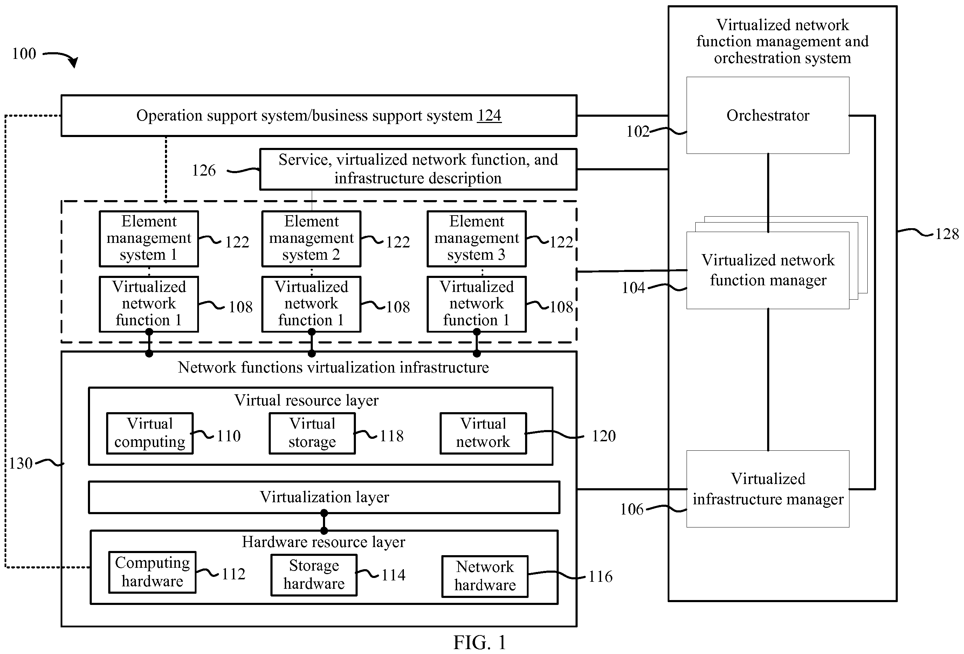

Referring to FIG. 1, FIG. 1 is a schematic system architecture diagram of a network functions virtualization NFV system 100 according to an embodiment of the present invention.

First, learn an NFV architecture from a vertical direction and a horizontal direction. According to design of the NFV architecture, the NFV architecture is divided into three layers from the vertical direction.

An infrastructure layer at a bottommost layer: From a cloud computing perspective, a network functions virtualization infrastructure NFVI 130 is a resource pool. The NFVI 130 includes hardware and software, which jointly establish a virtualized environment to deploy, manage, and execute a virtualized network function VNF 108. In other words, a hardware resource layer and a virtual resource layer are configured to provide the VNF 108 with virtual resources such as a virtual machine and/or a virtual container in another form. A physical infrastructure of the NFVI is a plurality of geographically dispersed data centers that are connected by using a high-speed communications network. The NFVI needs to respectively convert computing hardware 112, storage hardware 114, and network hardware 116 into virtual computing 110, virtual storage 118, and a virtual network 120 by using a virtualization layer. Virtualization of the network hardware may be implemented by using a technology such as a virtual LAN (VLAN), a virtual private LAN service (VPLS), a virtual extensible local area network (VxLAN), or network virtualization using generic routing encapsulation ( NVGRE).

A virtual network layer at an intermediate layer: The virtual network layer is corresponding to each current telecommunication service network. Each physical network element is mapped to one virtualized network function VNF. Resources required by the VNF need to be decomposed into virtual computing/storage/network resources, which are carried by the NFVI. The VNF 108 is virtualization of at least one network function, and the network function is previously provided by a physical network device. In an implementation, the VNF 108 may be a virtualized mobility management entity (MME) node, configured to provide all network functions provided by a typical non-virtualized MME device. In another implementation, the VNF 108 may be configured to implement functions of some components in all components provided by a non-virtualized MME device. One or more VNFs 108 may be deployed on one virtual machine (or a virtual container in another form). An EMS 122 may be configured to manage one or more VNFs.

An operation support layer at a topmost layer: An operation support system/business support system (OSS/BSS) 124 is mainly designed for a telecommunication service operator, and provides integrated network management and business operation functions, including network management (for example, fault monitoring or network information collection), billing management, customer service management, and the like.

A service, virtualized network function, and infrastructure description system 126 is described in detail in the ETSI GS NFV 002 v1.1.1 standard, and is not described herein in this embodiment of the present invention.

Second, the NFV architecture is divided into two layers in the horizontal direction.

A service network domain on the left: The service network domain is each current telecommunication service network.

A management and orchestration domain on the right: A virtualized network function management and orchestration system (MANO) 128 is responsible for management and orchestration of entire NFVI resources, responsible for mapping and association between a service network and an NFVI resource, responsible for implementation of an OSS service resource procedure, and the like. The MANO internally includes an orchestrator (Orchestrator) 102, one or more VNF managers (VNFM) 104, and one or more virtualized infrastructure managers (VIM) 106, which complete management of three layers of an NetworkService (NS) layer, i.e. a network service provided by a service network, a VNF layer, and an NFVI layer, respectively. The VNF manager 104 may communicate with the VNF 108 and the EMS 122 to perform VNF lifecycle management and implement exchange of configuration/status information. The VNFM 104 may further be configured to manage one or more VNFs 108, and implement various management functions, for example, initializing, updating, querying, and/or terminating the VNF 108. The virtualized infrastructure manager 106 may be configured to control and manage interaction between the VNF 108 and the computing hardware 112, the storage hardware 114, the network hardware 116, the virtual computing 110, the virtual storage 118, and the virtual network 120. For example, the virtualized infrastructure manager 106 may be configured to perform an operation of allocating a resource to the VNF 108. The VNFM 104 and the virtualized infrastructure manager 106 may mutually communicate to exchange configuration information and status information of a virtualized hardware resource. The orchestrator 102 may communicate with one or more VNF managers 104 to implement resource-related requests, send configuration information to the VNF manager 104, and collect status information of the VNF 108. In addition, the orchestrator 102 may further communicate with the virtualized infrastructure manager 106 to implement resource allocation, and/or implement reservation and exchange of the configuration information and status information of the virtualized hardware resource.

This embodiment of the present invention may include the following several cases according to different software upgrade objects.
1. Both software deployed on a VIM module and software deployed on any host on an NFVI module managed by the VIM module have a version upgrade requirement.

In this case, in this embodiment of the present invention, a first VIM module is a VIM on which post-upgrade new-version software is installed, and a second VIM module is a VIM on which pre-upgrade old-version software is installed. A first VM is managed by the first VIM module, and a second VM is managed by the second VIM module.

The pre-upgrade old-version software and the post-upgrade new-version software that are deployed on the VIM modules may be homogeneous software, or may be heterogeneous software. The following uses the homogeneous software as an example for description.

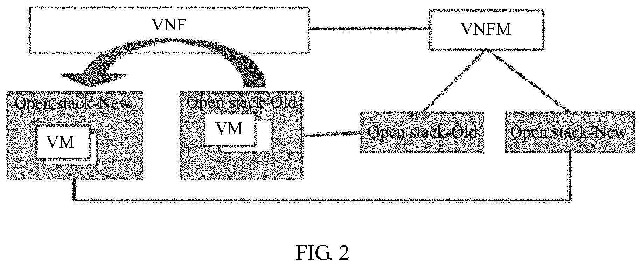

As shown in FIG. 2, FIG. 2 is a schematic architecture diagram of an upgrade between VIM modules with homogeneous software according to an embodiment of the present invention. A VNFM module sends a virtual machine request command to a first VIM module on which post-upgrade new-version OpenStack software is installed. The first VIM module requests a first VM on a first host on which the post-upgrade new-version OpenStack software is installed, and configures, for the first VM, virtual machine own data that can run on the first host. The VNFM module can also send a virtual machine query command to a second VIM module on which pre-upgrade old-version OpenStack software is installed. The second VIM module finds, by means of querying, a second VM on a second host on which the pre-upgrade old-version OpenStack software is installed. The VNFM module sends a service migration command to a VNF module, to instruct the VNF module to migrate a running service on the second VM to the first VM.

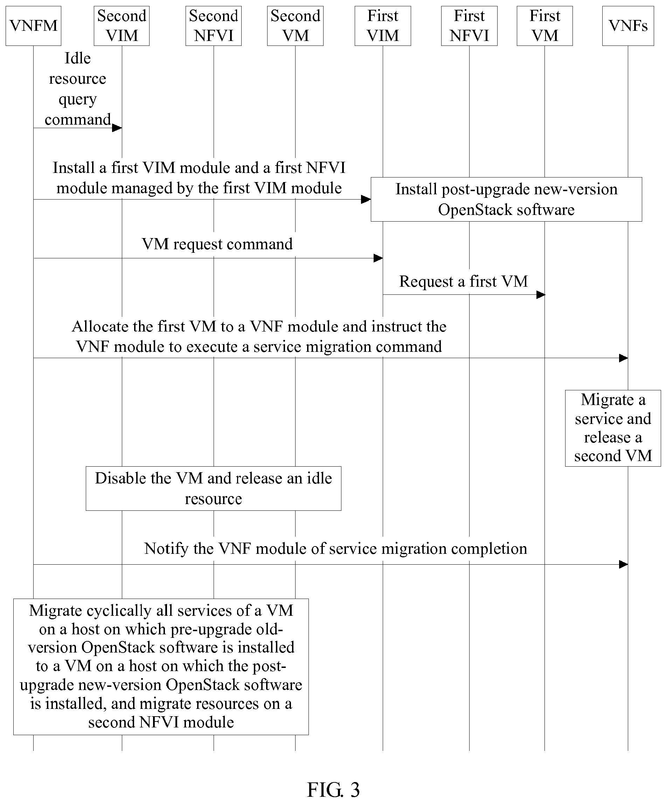

For FIG. 2, an embodiment of the present invention further provides a signaling interaction diagram of a service migration method that is used in an upgrade between VIM modules with homogeneous software in an NFV architecture, as shown in FIG. 3.

S301: A VNFM module sends an idle resource query command to a second VIM module, and the second VIM module queries whether there is an idle resource at present.

S302: When learning that there is an idle resource at present, the VNFM module installs a first VIM module and a first NFVI module managed by the first VIM module, and establishes a message interface with the first VIM module.

S303: Install post-upgrade new-version OpenStack software on the first VIM module and the first NFVI module.

S304: The VNFM module sends a virtual machine request command to the first VIM module, where the virtual machine request command is used to instruct the first VIM module to request a first VM on a first host that is on the first NFVI module managed by the first VIM module.

S305: The first VIM module requests, according to the virtual machine request command, the first VM on the first host that is on the first NFVI module.

After obtaining the first VM by means of requesting, the first VIM module configures, for the first VM, virtual machine own data that can run on the first host. The virtual machine own data configured for the first VM includes data other than service data running on the first VM, for example, environment configuration parameter data.

Specifically, the virtual machine request command that is sent by the VNFM module to the first VIM module includes a specification parameter indicating a virtual machine requested by the first VIM module, for example, a memory size or a quantity of CPUs. After requesting the first VM that can meet the specification parameter, the first VIM module configures, for the first VM according to an environmental parameter of the post-upgrade new-version software currently deployed on the first host, the virtual machine own data that can run on the first host, and starts the first VM.

S306: The VNFM module allocates the first VM to a VNF module and instructs the VNF module to execute a service migration command. The service migration command includes information about the first VM and information about a second VM, and is specifically used to instruct the VNF module to migrate a running service on the second VM to the first VM.

In an actual application, before the VNFM module sends the service migration command to the VNF module, the VNFM module first sends a virtual machine query command to the second VIM module. Specifically, because a service of the VNF module is currently running on a VM on a second host managed by the second VIM module, the VNFM module obtains the information about the second VM by instructing the second VIM module to query the VM that is running the service of the VNF module.

Specifically, the VNFM module sends a virtual machine query command that carries an identifier of the VNF module to the second VIM module. The second VIM module queries, according to the identifier of the VNF module, information about the VM that is running the service of the VNF module.

S307: The VNF module migrates, according to the service migration command, the running service on the second VM to the first VM.

Because the virtual machine own data that can run on the first host on which the post-upgrade new-version software is installed is configured for the first VM, it can be ensured that a service can run on the first VM normally. When the VNF module migrates the running service to the first VM, it can also be ensured that the running service is not interrupted. In this embodiment of the present invention, the migration of the running service by the VNF module is essentially also a migration of data included in the service. The data of the service specifically includes database data of the service and message data of the service.

In an actual application, the VNF module may implement the migration of the running service by means of active/standby switchover, service distribution, or protocol adjustment.

S308: After receiving a notification that the VNF module finishes migrating the running service on the second VM to the first VM, the VNFM module disables the second VM and releases an idle resource.

In an actual application, services of a VNF module may run on a plurality of VMs on a host, or may run on a plurality of VMs on a plurality of hosts. The foregoing steps S304 to S308 are cyclically performed to gradually migrate the services of the VNF module to a VM on which the post-upgrade new-version software is configured, so as to complete the migration of the services of the VNF module.

S309: When all services of the VNF module are migrated, the VNFM module notifies the VNF module of service migration completion.

Services of another VNF module that runs in a pre-upgrade old-version software environment may also be hitlessly migrated by cyclically performing steps S304 to S309. After all VMs on a host on a second NFVI module complete a service migration, computing resources, storage resources, network resources, and the like of the second NFVI module are also migrated to the first NFVI module. In addition, resources of the second VIM module may also be released.

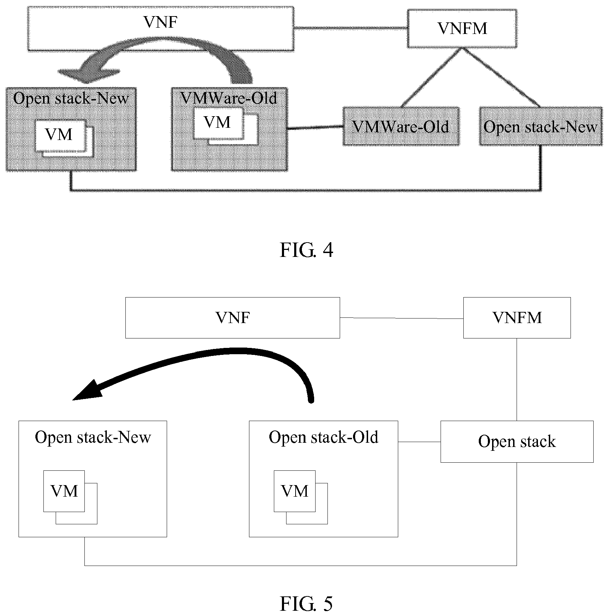

An embodiment of the present invention further provides a service migration method that is used in an upgrade between VIM modules with heterogeneous software in an NFV architecture. As shown in FIG. 4, FIG. 4 is a schematic architecture diagram of an upgrade between VIM modules with heterogeneous software according to an embodiment of the present invention. A process of an upgrade between VIM modules with heterogeneous software is basically the same as a process of an upgrade between VIM modules with homogeneous software, and only differs in that in S303 in FIG. 3, post-upgrade new-version software installed on the first VIM module and the first NFVI module is VMWare software. The VMWare software and the OpenStack software are different types of software. Therefore, an upgrade between the VMWare software and the OpenStack software is a heterogeneous software upgrade. In this embodiment of the present invention, the OpenStack software or the VMWare software installed on the first VIM module, the second VIM module, the first NFVI module, and the second NFVI module exists only as a common software type, and does not limit a scope of this embodiment of the present invention.
2. Software deployed on a VIM module does not have an upgrade requirement, and only software deployed on any host on an NFVI module managed by the VIM module has a version upgrade requirement.

In this case, in this embodiment of the present invention, a VIM module related before and after software deployed on a host is upgraded is a first VIM module, and both a first VM and a second VM are managed by the first VIM module. However, the first VM is a VM deployed on a first host on which post-upgrade new-version software is installed, and the second VM is a VM deployed on a second host on which pre-upgrade old-version software is installed.

As shown in FIG. 5, FIG. 5 is a schematic diagram of an architecture in which software deployed on a VIM module is not upgraded and only software deployed on a host is upgraded, according to an embodiment of the present invention.

A VNFM module sends a virtual machine request command to a first VIM module. The first VIM module requests a first VM on a first host Host on which post-upgrade new-version OpenStack software is installed, and configures, for the first VM, virtual machine own data that can run on the first host. The VNFM module can also send a virtual machine query command to the first VIM module. The first VIM module finds, by means of querying, a second VM on a second host on which pre-upgrade old-version OpenStack software is installed. The VNFM module sends a service migration command to a VNF module, to instruct the VNF module to migrate a running service on the second VM to the first VM.

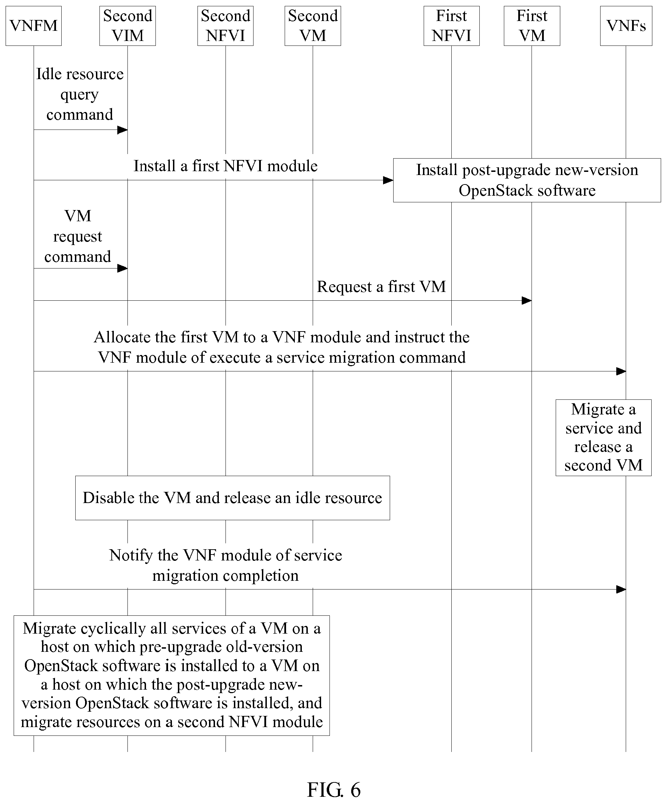

For FIG. 5, an embodiment of the present invention further provides a signaling interaction diagram of a method used when software deployed on a VIM module is not upgraded and only software deployed on a host is upgraded, as shown in FIG. 6. For details, refer to an understanding of FIG. 3.

S601: A VNFM module sends an idle resource query command to a first VIM module, and the first VIM module queries whether there is an idle resource at present.

S602: When learning that there is an idle resource at present, the VNFM module installs a first NFVI module, where the first NFVI module is managed by the first VIM module.

S603: Install post-upgrade new-version OpenStack software on the first NFVI module.

S604: The VNFM module sends a virtual machine request command to the first VIM module, where the virtual machine request command is used to instruct the first VIM module to request a first VM on a first host that is on the first NFVI module managed by the first VIM module.

S605: The first VIM module requests, according to the virtual machine request command and on the first host that is on the first NFVI module, the first VM on which virtual machine own data that can run on the first host is configured, and starts the first VM.

S606: The VNFM module allocates the first VM to a VNF module and instructs the VNF module to execute a service migration command. The service migration command includes information about the first VM and information about a second VM, and is specifically used to instruct the VNF module to migrate a running service on the second VM to the first VM.

S607: The VNF module migrates, according to the service migration command, the running service on the second VM to the first VM.

In an actual application, before the VNFM module sends the service migration command to the VNF module, the VNFM module first sends a virtual machine query command to the first VIM module. Specifically, because a service of the VNF module is currently running on a VM on a second host managed by the first VIM module, the VNFM module obtains the information about the second VM by instructing the first VIM module to query the VM that is running the service of the VNF module.

Specifically, the VNFM module sends a virtual machine query command that carries an identifier of the VNF module to the first VIM module. The first VIM module queries, according to the identifier of the VNF module, information about the VM that is running the service of the VNF module.

S608: After receiving a notification that the VNF module finishes migrating the running service on the second VM to the first VM, the VNFM module disables the second VM and releases an idle resource.

S609: When all services of the VNF module are migrated, the VNFM module notifies the VNF module of service migration completion.

Services of another VNF module that runs in a pre-upgrade old-version software environment may also be hitlessly migrated by cyclically performing steps S604 to S609. After all VMs on a host on a second NFVI module complete a service migration, computing resources, storage resources, network resources, and the like of the second NFVI module are also migrated to the first NFVI module.

In addition, the VIM module in the VNF architecture may manage a plurality of NFVI modules. Therefore, the first NFVI module and the second NFVI module may be two different NFVI modules both managed by the first VIM module, or may be the same NFVI module managed by the first VIM module.

In the service migration method that is used in a software upgrade in an NFV architecture and that is provided in this embodiment of the present invention, because the virtual machine own data that can run on the first host on which the post-upgrade new-version software is configured is configured on the first VM that the VNFM module instructs the first VIM module to request, it can be ensured that the service migrated by the VNF module to the first VM runs without being interrupted. Even if the new-version software and the old-version software do not meet a compatibility condition, this embodiment of the present invention can still implement that the service migration in the software upgrade does not interrupt a service that runs normally.

Actually, in the service migration method that is used in a software upgrade in an NFV architecture and that is provided in this embodiment of the present invention, because the virtual machine own data that can run on the first host on which the post-upgrade new-version software is configured is configured on the first VM that the first VIM module requests, the service migrated to the first VM can run without being interrupted, and the service migration in this embodiment of the present invention does not have a problem that the new-version software and the old-version software are not compatible. That is, regardless of whether the new-version software and the old-version software are compatible, this embodiment of the present invention helps ensure that the service migrated in the software upgrade can run normally and continuously, and even that the service is not interrupted.

The VNFM module may communicate with the VNF module and an EMS module, and the EMS module is configured to manage the VNF module. Therefore, in this embodiment of the present invention, the EMS module is used as a forwarding module. After the VNFM module sends the service migration command to the element management system EMS module that is configured to manage the VNF module, the EMS module forwards the received service migration command to the VNF module. Other procedures in this specific application in which the EMS module is used to forward the service migration command may be understood with reference to FIG. 2 to FIG. 6.

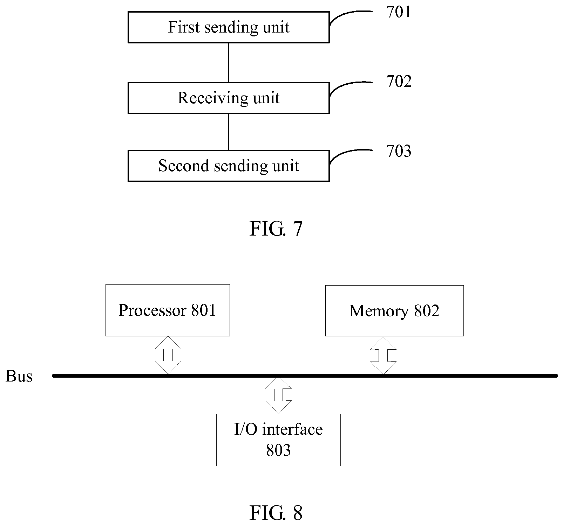

An embodiment of the present invention further provides a service migration apparatus that is used in a software upgrade in an NFV architecture. For an embodiment of the apparatus, refer to descriptions in the method embodiments. FIG. 7 is a schematic structural diagram of a service migration apparatus that is used in a software upgrade in an NFV architecture, according to an embodiment of the present invention. The apparatus includes:
a first sending unit 701, configured to send a virtual machine VM request command to a first virtualized infrastructure manager VIM module, where the first VIM module manages a first host Host on which post-upgrade new-version software is configured;
a receiving unit 702, configured to receive a VM request response from the first VIM module, where the VM request response includes information about a first VM that the first VIM module requests on the first host Host, and virtual machine own data that can run on the first host is configured on the first VM; and
a second sending unit 703, configured to send a service migration command to a virtualized network function VNF module, where the service migration command is used to instruct the VNF module to migrate a running service on a second VM to the first VM, and the second VM is deployed on a second host on which pre-upgrade old-version software is configured.

In the service migration apparatus that is used in a software upgrade in an NFV architecture and that is provided in this embodiment of the present invention, because the virtual machine own data that can run on the first host on which the post-upgrade new software is installed is configured on the first VM that the first sending unit instructs the first VIM module to request, the service migrated by the VNF module to the first VM can run without being interrupted. Even if the new-version software and the old-version software in the software upgrade do not meet a compatibility condition in the foregoing application scenario, this embodiment of the present invention can still implement that the service migration in the software upgrade does not interrupt a service that runs normally.

In an implementation scenario, to resolve a problem that both software deployed on a VIM module and software deployed on any host on an NFVI module managed by the VIM module have a version upgrade requirement, in this embodiment of the present invention, the first VIM module is a VIM on which the post-upgrade new-version software is installed, a second VIM module is a VIM on which the pre-upgrade old-version software is installed, and the software deployed on the VIM modules may be homogeneous software or heterogeneous software. The first VM is managed by the first VIM module, and the second VM is managed by the second VIM module. The first VM is a VM deployed on the first host on which the post-upgrade new-version software is installed, the second VM is a VM deployed on the second host on which the pre-upgrade old-version software is installed, and the software deployed on the hosts may also be homogeneous software or heterogeneous software. An apparatus embodiment in the foregoing implementation scenario may be understood with reference to FIG. 2, FIG. 3, and FIG. 4 in the method embodiments.

In this implementation scenario, based on an apparatus structure in FIG. 7, the apparatus further includes a first query unit, configured to send a virtual machine query command to the first VIM module, where the virtual machine query command is used to instruct the first VIM module to query information about the second VM that is running a service of the VNF module.

In another implementation scenario, to resolve a problem that software deployed on a VIM module does not have an upgrade requirement and only software deployed on any host on an NFVI module managed by the VIM module has a version upgrade requirement, in this embodiment of the present invention, a VIM module related before and after software deployed on a host is upgraded is the first VIM module, and both the first VM and the second VM are managed by the first VIM module. However, the first VM is a VM deployed on the first host on which the post-upgrade new-version software is installed, and the second VM is a VM deployed on the second host on which the pre-upgrade old-version software is installed. An apparatus embodiment in this implementation scenario may be understood with reference to FIG. 5 and FIG. 6 in the method embodiments.

In this implementation scenario, based on an apparatus structure in FIG. 7, the apparatus further includes a second query unit, configured to send a virtual machine query command to the second VIM module, where the virtual machine query command is used to instruct the second VIM module to query information about the second VM that is running a service of the VNF module.

To reduce a waste of resources, on a basis of the apparatus structure in FIG. 7, the apparatus further includes:
a release unit, configured to: after a service migration completion notification from the VNF module is received, release the second VM.

In another implementation, an EMS module is used as a forwarding module of the service migration command. In this implementation, on the basis of the apparatus structure in FIG. 7, the apparatus further includes a second sending unit, specifically configured to send the service migration command to the element management system EMS module, so that the EMS module forwards the service migration command to the VNF module, where the EMS module is configured to manage the VNF module.

FIG. 8 is a schematic structural diagram of a service migration server that is used in a software upgrade in an NFV architecture, according to an embodiment of the present invention. As shown in FIG. 8, the server includes a processor 801 and a memory 802, and further includes an I/O interface 803. The processor and the memory are connected by using a bus. The memory stores program code and transmits the program code to the processor. The processor invokes and executes an instruction in the memory, to implement the foregoing service migration method that is used in a software upgrade in an NFV architecture. The I/O interface is configured to communicate with a first VIM module and a VNF module.

For technical principles and technical effects of the server in this embodiment of the present invention, refer to related descriptions in the embodiments shown in FIG. 1 to FIG. 7. Details are not described herein again.

It may be clearly understood by persons skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

The foregoing integrated unit implemented in a form of a software functional unit may be stored in a computer-readable storage medium. The software functional unit is stored in a storage medium and includes several instructions for instructing a computer device (which may be a personal computer, a server, a network device, or the like) to perform some of the steps of the methods described in the embodiments of the present invention. The foregoing storage medium includes: any medium that can store program code, such as a removable hard disk, a read-only memory (ROM), a random access memory (RAM), a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of the embodiments of the present invention.

## Claims

1. A service migration method that is used in a software upgrade in an NFV architecture, wherein the method comprises:
sending (S304, S604), by a virtualized network function manager, VNFM, module, a virtual machine, VM, request command to a first virtualized infrastructure manager, VIM, module, wherein the first VIM module manages a first host on which first software is installed;
receiving, by the VNFM module, a VM request response from the first VIM module, wherein the VM request response comprises information about a first VM that the first VIM module requests on the first host, and virtual machine own data that can run on the first host is configured on the first VM, the virtual machine own data for the first VM is configured by the first VIM module according to an environmental parameter of the first software deployed on the first host, the first VM is deployed on the first host; and
sending (S306, S606), by the VNFM module, a service migration command to a virtualized network function, VNF, module, wherein the service migration command is used to instruct the VNF module to migrate a running service on a second VM to the first VM, and the second VM is deployed on a second host on which second software is installed;
wherein the first software and the second software are homogeneous software or heterogeneous software.

2. The method according to claim 1, wherein the method further comprises:
after the VNFM module receives a service migration completion notification from the VNF module, releasing (S308, S608), by the VNFM module, the second VM.

3. The method according to claim 1, wherein the second host is managed by the first VIM module, and before the sending, by the VNFM module, a service migration command to a virtualized network function, VNF, module, the method further comprises:
sending, by the VNFM module, a virtual machine query command to the first VIM module, wherein the virtual machine query command is used to instruct the first VIM module to query information about the second VM that is running a service of the VNF module; and
the service migration command that is sent by the VNFM module to the VNF module carries the information about the second VM.

4. The method according to claim 1, wherein the first software is configured on the first VIM module, the second host is managed by a second VIM module on which the second software is configured, and before the sending, by the VNFM module, a service migration command to a virtualized network function VNF module, the method further comprises:
sending, by the VNFM module, a virtual machine query command to the second VIM module, wherein the virtual machine query command is used to instruct the second VIM module to query information about the second VM that is running a service of the VNF module; and
the service migration command that is sent by the VNFM module to the VNF module carries the information about the second VM.

5. The method according to claim 1, wherein the sending, by the VNFM module, a service migration command to a virtualized network function VNF module comprises:
sending, by the VNFM module, the service migration command to an element management system EMS module, so that the EMS module forwards the service migration command to the VNF module, wherein the EMS module is configured to manage the VNF module.

6. A service migration apparatus that is used in a software upgrade in an NFV architecture, wherein the apparatus comprises:
a first sending unit (701), configured to send a virtual machine, VM, request command to a first virtualized infrastructure manager, VIM, module, wherein the first VIM module manages a first host on which first software is installed;
a receiving unit (702), configured to receive a VM request response from the first VIM module, wherein the VM request response comprises information about a first VM that the first VIM module requests on the first host, and virtual machine own data that can run on the first host is configured on the first VM, the virtual machine own data for the first VM is configured by the first VIM module according to an environmental parameter of the first software deployed on the first host, the first VM is deployed on the first host; and
a second sending unit (703), configured to send a service migration command to a virtualized network function, VNF, module, wherein the service migration command is used to instruct the VNF module to migrate a running service on a second VM to the first VM, and the second VM is deployed on a second host on which second software is installed;
wherein the first software and the second software are homogeneous software or heterogeneous software.

7. The apparatus according to claim 6, wherein the apparatus further comprises:
a release unit, configured to: after a service migration completion notification from the VNF module is received, release the second VM.

8. The apparatus according to claim 6, wherein the second host is managed by the first VIM module, and the apparatus further comprises:
a first query unit, configured to send a virtual machine query command to the first VIM module, wherein the virtual machine query command is used to instruct the first VIM module to query information about the second VM that is running a service of the VNF module; and
the service migration command that is sent by a VNFM module to the VNF module carries the information about the second VM.

9. The apparatus according to claim 6, wherein the first software is configured on the first VIM module, the second host is managed by a second VIM module on which the second software is configured, and the apparatus further comprises:
a second query unit, configured to send a virtual machine query command to the second VIM module, wherein the virtual machine query command is used to instruct the second VIM module to query information about the second VM that is running a service of the VNF module; and
the service migration command that is sent by a VNFM module to the VNF module carries the information about the second VM.

10. The apparatus according to claim 6, wherein the second sending unit is specifically configured to send the service migration command to an element management system, EMS, module, so that the EMS module forwards the service migration command to the VNF module, wherein the EMS module is configured to manage the VNF module.

## Patentansprüche

1. Dienstmigrationsverfahren, das in einer Softwareaktualisierung in einer NFV-Architektur verwendet wird, wobei das Verfahren Folgendes umfasst:
Senden (S304, S604), durch ein Funktionsverwaltungsmodul für ein virtualisiertes Netzwerk (VNFM-Modul), eines Anfragebefehls für eine virtuelle Maschine (VM-Anfragebefehl) an ein erstes Verwaltungsmodul für eine virtualisierte Infrastruktur (VIM-Modul), wobei das erste VIM-Modul einen ersten Host verwaltet, auf dem eine erste Software installiert ist;
Empfangen, durch das VNFM-Modul, einer VM-Anfrageantwort von dem ersten VIM-Modul, wobei die VM-Anfrageantwort Informationen über eine erste VM umfasst, die das erste VIM-Modul auf dem ersten Host anfragt, und der virtuellen Maschine eigene Daten, die auf dem ersten Host ausgeführt werden können, auf der ersten VM konfiguriert sind, wobei die der virtuellen Maschine eigenen Daten für die erste VM durch das erste VIM-Modul gemäß einem Umgebungsparameter der ersten Software konfiguriert sind, die auf dem ersten Host eingesetzt wird, wobei die erste VM auf dem ersten Host eingesetzt wird; und
Senden (S306, S606), durch das VNFM-Modul, eines Dienstmigrationsbefehls an ein Funktionsmodul für ein virtualisiertes Netzwerk (VNF-Modul), wobei der Dienstmigrationsbefehl verwendet wird, um das VNF-Modul anzuweisen, einen laufenden Dienst auf einer zweiten VM an die erste VM zu migrieren, und die zweite VM auf einem zweiten Host eingesetzt wird, auf dem eine zweite Software installiert ist; wobei die erste und die zweite Software homogene Software oder heterogene Software sind.

2. Verfahren nach Anspruch 1, wobei das Verfahren ferner Folgendes umfasst:
nachdem das VNFM-Modul eine Dienstmigrationsabschlussbenachrichtigung von dem VNF-Modul erhält, Freigeben (S308, S608) der zweiten VM durch das VNFM-Modul.

3. Verfahren nach Anspruch 1, wobei der zweite Host durch das erste VIM-Modul verwaltet wird und das Verfahren vor dem Senden, durch das VNFM-Modul, eines Dienstmigrationsbefehls an ein Funktionsmodul für ein virtualisiertes Netzwerk (VNF-Modul), ferner Folgendes umfasst:
Senden, durch das VNFM-Modul, eines Abfragebefehls für eine virtuelle Maschine an das erste VIM-Modul, wobei der Abfragebefehl für eine virtuelle Maschine verwendet wird, um das erste VIM-Modul anzuweisen, Informationen über die zweite VM abzufragen, die einen Dienst des VNF-Moduls ausführt; und
der Dienstmigrationsbefehl, der durch das VNFM-Modul an das VNF-Modul gesendet wird, die Informationen über die zweite VM enthält.

4. Verfahren nach Anspruch 1, wobei die erste Software auf dem ersten VIM-Modul konfiguriert ist, der zweite Host durch ein zweites VIM-Modul verwaltet wird, auf dem die zweite Software konfiguriert ist, und das Verfahren vor dem Senden, durch das VNFM-Modul, eines Dienstmigrationsbefehls an ein Funktionsmodul für ein virtualisiertes Netzwerk (VNF-Modul), ferner Folgendes umfasst:
Senden, durch das VNFM-Modul, eines Abfragebefehls für eine virtuelle Maschine an das zweite VIM-Modul, wobei der Abfragebefehl für eine virtuelle Maschine verwendet wird, um das zweite VIM-Modul anzuweisen, Informationen über die zweite VM abzufragen, die einen Dienst des VNF-Moduls ausführt; und
der Dienstmigrationsbefehl, der durch das VNFM-Modul an das VNF-Modul gesendet wird, die Informationen über die zweite VM enthält.

5. Verfahren nach Anspruch 1, wobei das Senden, durch das VNFM-Modul, eines Dienstmigrationsbefehls an ein Funktionsmodul für ein virtualisiertes Netzwerk (VNF-Modul) Folgendes umfasst:
Senden, durch das VNFM-Modul, des Dienstmigrationsbefehls an ein Elementverwaltungssystem-Modul (EMS-Modul), sodass das EMS-Modul den Dienstmigrationsbefehl an das VNF-Modul weiterleitet, wobei das EMS-Modul dazu konfiguriert ist, das VNF-Modul zu verwalten.

6. Dienstmigrationseinrichtung, die in einer Softwareaktualisierung in einer NFV-Architektur verwendet wird, wobei die Einrichtung Folgendes umfasst:
eine erste Sendeeinheit (701), die dazu konfiguriert ist, einen Anfragebefehl für eine virtuelle Maschine (VM-Anfragebefehl) an ein erstes Verwaltungsmodul für eine virtualisierte Infrastruktur (VIM-Modul) zu senden, wobei das erste VIM-Modul einen ersten Host verwaltet, auf dem eine erste Software installiert ist;
eine Empfangseinheit (702), die dazu konfiguriert ist, eine VM-Anfrageantwort von dem ersten VIM-Modul zu empfangen, wobei die VM-Anfrageantwort Informationen über eine erste VM umfasst, die das erste VIM-Modul auf dem ersten Host anfragt, und einer virtuellen Maschine eigene Daten, die auf dem ersten Host ausgeführt werden können, auf der ersten VM konfiguriert sind, wobei die einer virtuellen Maschine eigenen Daten für die erste VM durch das erste VIM-Modul gemäß einem Umgebungsparameter der ersten Software konfiguriert sind, die auf dem ersten Host eingesetzt wird, wobei die erste VM auf dem ersten Host eingesetzt wird; und
eine zweite Sendeeinheit (703), die dazu konfiguriert ist, einen Dienstmigrationsbefehl an ein Funktionsmodul für ein virtualisiertes Netzwerk (VNF-Modul) zu senden, wobei der Dienstmigrationsbefehl verwendet wird, um das VNF-Modul anzuweisen, einen laufenden Dienst auf einer zweiten VM an die erste VM zu migrieren und die zweite VM auf einem zweiten Host eingesetzt wird, auf dem eine zweite Software installiert ist;
wobei die erste Software und die zweite Software homogene Software oder heterogene Software sind.

7. Einrichtung nach Anspruch 6, wobei die Einrichtung ferner Folgendes umfasst:
eine Freigabeeinheit, die zu Folgendem konfiguriert ist: Freigeben der zweiten VM, nachdem eine Dienstmigrationsabschlussbenachrichtigung von dem VNF-Modul empfangen wurde.

8. Einrichtung nach Anspruch 6, wobei der zweite Host durch das erste VIM-Modul verwaltet wird und die Einrichtung ferner Folgendes umfasst:
eine erste Abfrageeinheit, die dazu konfiguriert ist, einen Abfragebefehl für eine virtuelle Maschine an das erste VIM-Modul zu senden, wobei der Abfragebefehl für eine virtuelle Maschine verwendet wird, um das erste VIM-Modul anzuweisen, Informationen über die zweite VM abzufragen, die einen Dienst des VNF-Moduls ausführt; und
der Dienstmigrationsbefehl, der durch ein VNFM-Modul an das VNF-Modul gesendet wird, die Informationen über die zweite VM enthält.

9. Einrichtung nach Anspruch 6, wobei die erste Software auf dem ersten VIM-Modul konfiguriert ist, der zweite Host durch ein zweites VIM-Modul verwaltet wird, auf dem die zweite Software konfiguriert ist, und die Einrichtung ferner Folgendes umfasst:
eine zweite Abfrageeinheit, die dazu konfiguriert ist, einen Abfragebefehl für eine virtuelle Maschine an das zweite VIM-Modul zu senden, wobei der Abfragebefehl für eine virtuelle Maschine verwendet wird, um das zweite VIM-Modul anzuweisen, Informationen über die zweite VM abzufragen, die einen Dienst des VNF-Moduls ausführt; und
der Dienstmigrationsbefehl, der durch ein VNFM-Modul an das VNF-Modul gesendet wird, die Informationen über die zweite VM enthält.

10. Einrichtung nach Anspruch 6, wobei die zweite Sendeeinheit speziell dazu konfiguriert ist, den Dienstmigrationsbefehl an ein Elementverwaltungssystem-Modul (EMS-Modul) zu senden, sodass das EMS-Modul den Dienstmigrationsbefehl an das VNF-Modul weiterleitet, wobei das EMS-Modul dazu konfiguriert ist, das VNF-Modul zu verwalten.

## Revendications

1. Procédé de migration de services qui est utilisé dans une mise à niveau logicielle dans une architecture NFV, dans lequel le procédé comprend :
l'envoi (S304, S604), par un module de gestionnaire de fonction de réseau virtualisé, VNFM, d'une commande de demande de machine virtuelle, VM, à un premier module de gestionnaire d'infrastructure virtualisée, VIM, dans lequel le premier module VIM gère un premier hôte sur lequel un premier logiciel est installé ;
la réception, par le module VNFM, d'une réponse de demande VM à partir du premier module VIM, dans lequel la réponse de demande VM comprend des informations concernant une première VM que le premier module VIM demande sur le premier hôte, et des propres données de machine virtuelle qui peuvent être exécutées sur le premier hôte sont configurées sur la première VM, les propres données de machine virtuelle pour la première VM sont configurées par le premier module VIM en fonction d'un paramètre environnemental du premier logiciel déployé sur le premier hôte, la première VM est déployée sur le premier hôte ; et
l'envoi (S306, S606), par le module VNFM, d'une commande de migration de services à un module de fonction de réseau virtualisé, VNF, dans lequel la commande de migration de services est utilisée pour donner instruction au module VNF de migrer un service en exécution sur une seconde VM vers la première VM, et la seconde VM est déployée sur un second hôte sur lequel un second logiciel est installé ;
dans lequel le premier logiciel et le second logiciel sont des logiciels homogènes ou des logiciels hétérogènes.

2. Procédé selon la revendication 1, dans lequel le procédé comprend en outre :
après que le module VNFM reçoit une notification d'achèvement de migration de services à partir du module VNF, la libération (S308, S608), par le module VNFM, de la seconde VM.

3. Procédé selon la revendication 1, dans lequel le second hôte est géré par le premier module VIM et, avant l'envoi, par le module VNFM, d'une commande de migration de services à un module de fonction de réseau virtualisé, VNF, le procédé comprend en outre :
l'envoi, par le module VNFM, d'une commande de consultation de machine virtuelle au premier module VIM, dans lequel la commande de consultation de machine virtuelle est utilisée pour donner instruction au premier module VIM de consulter des informations concernant la seconde VM qui exécute un service du module VNF ; et
la commande de migration de services qui est envoyée par le module VNFM au module VNF transporte les informations concernant la seconde VM.

4. Procédé selon la revendication 1, dans lequel le premier logiciel est configuré sur le premier module VIM, le second hôte est géré par un second module VIM sur lequel le second logiciel est configuré, et, avant l'envoi, par le module VNFM, d'une commande de migration de services à un module de fonction de réseau virtualisé, VNF, le procédé comprend en outre :
l'envoi, par le module VNFM, d'une commande de consultation de machine virtuelle au second module VIM, dans lequel la commande de consultation de machine virtuelle est utilisée pour donner instruction au second module VIM de consulter des informations concernant la seconde VM qui exécute un service du module VNF ; et
la commande de migration de services qui est envoyée par le module VNFM au module VNF transporte les informations concernant la seconde VM.

5. Procédé selon la revendication 1, dans lequel l'envoi, par le module VNFM, d'une commande de migration de services à un module de fonction de réseau virtualisé, VNF, comprend :
l'envoi, par le module VNFM, d'une commande de migration de services à un module de système de gestion d'élément, EMS, de manière que le module EMS transfère la commande de migration de services au module VNF, dans lequel le module EMS est configuré pour gérer le module VNF.

6. Appareil de migration de services qui est utilisé dans une mise à niveau logicielle dans une architecture NFV, dans lequel l'appareil comprend :
une première unité d'envoi (701) configurée pour envoyer une commande de demande de machine virtuelle, VM, à un premier module de gestionnaire d'infrastructure virtualisée, VIM, dans lequel le premier module VIM gère un premier hôte sur lequel un premier logiciel est installé ;
une unité de réception (702) configurée pour recevoir une réponse de demande VM à partir du premier module VIM, dans lequel la réponse de demande VM comprend des informations concernant une première VM que le premier module VIM demande sur le premier hôte, et des propres données de machine virtuelle qui peuvent être exécutées sur le premier hôte sont configurées sur la première VM, les propres données de machine virtuelle pour la première VM sont configurées par le premier module VIM en fonction d'un paramètre environnemental du premier logiciel déployé sur le premier hôte, la première VM est déployée sur le premier hôte ; et
une seconde unité d'envoi (703) configurée pour envoyer une commande de migration de services à un module de fonction de réseau virtualisé, VNF, dans lequel la commande de migration de services est utilisée pour donner instruction au module VNF de migrer un service en exécution sur une seconde VM vers la première VM, et la seconde VM est déployée sur un second hôte sur lequel un second logiciel est installé ;
dans lequel le premier logiciel et le second logiciel sont des logiciels homogènes ou des logiciels hétérogènes.

7. Appareil selon la revendication 6, dans lequel l'appareil comprend en outre :
une unité de libération configurée pour : après qu'une notification d'achèvement de migration de services provenant du module VNF est reçue, libérer la seconde VM.

8. Appareil selon la revendication 6, dans lequel le second hôte est géré par le premier module VIM, et l'appareil comprend en outre :
une première unité de consultation configurée pour envoyer une commande de consultation de machine virtuelle au premier module VIM, dans lequel la commande de consultation de machine virtuelle est utilisée pour donner instruction au premier module VIM de consulter des informations concernant la seconde VM qui exécute un service du module VNF ; et
la commande de migration de services qui est envoyée par le module VNFM au module VNF transporte les informations concernant la seconde VM.

9. Appareil selon la revendication 6, dans lequel le premier logiciel est configuré sur le premier module VIM, le second hôte est géré par un second module VIM sur lequel le second logiciel est configuré, et l'appareil comprend en outre :
une seconde unité de consultation configurée pour envoyer une commande de consultation de machine virtuelle au second module VIM, dans lequel la commande de consultation de machine virtuelle est utilisée pour donner instruction au second module VIM de consulter des informations concernant la seconde VM qui exécute un service du module VNF ; et
la commande de migration de services qui est envoyée par le module VNFM au module VNF transporte les informations concernant la seconde VM.

10. Appareil selon la revendication 6, dans lequel la seconde unité d'envoi est configurée spécifiquement pour envoyer la commande de migration de services à un module de système de gestion d'élément, EMS, de manière que le module EMS transfère la commande de migration de services au module VNF, dans lequel le module EMS est configuré pour gérer le module VNF.
